# EUROPÄISCHE PATENTANMELDUNG

(11) **EP 1 256 821 A2**
(43) Veröffentlichungstag der Anmeldung: **13.11.2002**
(21) Anmeldenummer: 02004081.2
(22) Anmeldetag: 25.02.2002
(51) Int. Cl.: G02B 5/18

(54) **Diffraktives optisches Element sowie optische Anordnung mit einem diffraktiven optischen Element**

(30) Priorität: 12.05.2001 DE 10123230
(71) Anmelder: CARL ZEISS SEMICONDUCTOR MANUFACTURING TECHNOLOGIES AG, 73447 Oberkochen (DE)
(72) Erfinder: Kleemann, Bernd, 73431 Aalen (DE); Rostalski, Hans-Jürgen, 73446 Oberkochen (DE); Ulrich, Willi, 73434 Aalen (DE)
(74) Vertreter: Ostertag, Ulrich, Dr.

(57) **Zusammenfassung**

Ein diffraktives optisches Element (101) weist eine Mehrzahl von Beugungsstrukturen (104 bis 109) für eine bestimmte Wellenlänge auf. Diese haben jeweils eine in der Ebene des diffraktiven optischen Elements (101) gemessene Breite (r) und eine senkrecht dazu gemessene Höhe (h). Die Breiten (r) und die Höhen (h) der Beugungsstrukturen (104 bis 109) variieren über die Fläche des diffraktiven optischen Elements (101). Eine optische Anordnung mit einem solchen diffraktiven optischen Element weist zusätzlich ein Neutralfilter auf. Die Effizienz eines derartigen diffraktiven optischen Elements (101) und einer derartigen Anordnung für nutzbares Licht läßt sich lokal optimieren.

## Beschreibung

Die Erfindung betrifft ein diffraktives optisches Element gemäß dem Oberbegriff des Anspruchs 1 sowie eine optische Anordnung mit einem diffraktiven optischen Element gemäß dem Oberbegriff des Anspruchs 9.

Ein diffraktives optisches Element gemäß dem Oberbegriff des Anspruchs 1 ist aus dem Fachartikel "Zonal diffraction efficiencies and imaging of micro-Fresnel lenses" aus J. Mod. Opt., 45, 1405, 1998, bekannt. Dort wird vorgeschlagen, die Strukturhöhen der Beugungsstrukturen mit zunehmendem Radius der dortigen Fresnel-Linsen, also mit abnehmender Strukturbreite, zu verringern, was bei den dort gewählten optischen Randbedingungen zu einer Erhöhung der Beugungseffizienz am Linsenrand führt.

Eine derartige Variation der Strukturhöhe führt bei vielen diffraktiven optischen Elementen, bei denen, wie noch diskutiert wird, die Beugungseffizienz mit geringerer Strukturbreite abnimmt, jedoch nicht zu einer Verbesserung der Beugungseffizienz, so daß die Lehre des Fachartikels nicht verallgemeinerbar ist.

Ein diffraktives optisches Element mit konstanten Strukturhöhen ist aus der US 5 623 365 A bekannt. Eines der dort beschriebenen transmissiven diffraktiven optischen Elemente hat die Funktion einer Linse mit einer bestimmten Brennweite. Dies bedingt, daß die Breiten der Beugungsstrukturen mit zunehmendem Mittelpunktsabstand geringer werden. Je größer die gewünschte Brechkraft eines derartigen diffraktiven optischen Elements bei gegebenem Brechungsindex sein soll, um so größer wird die Variation der Breiten der Beugungsstrukturen mit dem Mittelpunktsabstand und damit die Variation des Verhältnisses aus dieser Breite und der Wellenlänge, das hauptsächlich für die erzielbare lokale Beugungseffizienz verantwortlich ist.

Bei einem diffraktiven optischen Element nach Art der US 5 623 365 A macht sich diese Variation des Verhältnisses aus Strukturbreite und Wellenlänge, wie Rechnungen auf Basis der elektromagnetischen Beugungstheorie gezeigt haben, darin bemerkbar, daß umso mehr Licht in andere Beugungsordnungen gebeugt wird, umso schmäler die Beugungsstrukturen sind. Hierdurch ergeben sich Verluste in der lokalen Beugungseffizienz im Bereich schmaler Beugungsstrukturen, was eine im Regelfall unerwünschte Variation der lokalen Beugungseffizienz des diffraktiven optischen Elements zur Folge hat.

In der EP 0 312 341 A2 ist ein transmissives diffraktives optisches Element beschrieben, welches mehrere konzentrisch angeordnete Beugungsbereiche aufweist, die jeweils für unterschiedliche Beleuchtungswellenlängen ausgelegt sind und innerhalb derer eine konstante Strukturhöhe vorliegt. Innerhalb eines jeden dieser Beugungsbereiche treten daher bei einer Variation der Strukturbreiten auch hier die im Zusammenhang mit der US 5 623 365 A erläuterten Nachteile, was die Abhängigkeit der lokalen Beugungseffizienz betrifft, auf.

Das diffraktive optische Element der EP 0 312 341 A2 kann zudem Ringzonen aufweisen, die opak oder teildurchlässig ausgeführt sind, um das durchtretende Licht zur Erzielung einer gewünschten Intensitätsverteilung im Strahlengang nach dem diffraktiven optischen Element zu beeinflussen. Aus der EP 0 312 341 A2 ist damit eine optische Anordnung nach dem Oberbegriff des Anspruchs 9 bekannt. Aufgrund der konstanten Strukturhöhen der Beugungsstrukturen für eine Beleuchtungswellenlänge ergeben sich auch hier die Nachteile, die im Zusammenhang mit der US 5 623 365 A diskutiert wurden.

Es ist daher eine erste Aufgabe der vorliegenden Erfindung, ein diffraktives optisches Element gemäß dem Oberbegriff des Anspruchs 1 derart weiterzubilden, daß seine lokale Beugungseffizienz optimal an den Einsatzzweck angepaßt ist.

Diese Aufgabe wird erfindungsgemäß gelöst durch ein diffraktives optisches Element mit den Merkmalen des Anspruchs 1.

Derartige diffraktive optische Elemente werden z. B. dazu eingesetzt, bestimmte Abbildungsfehler einer optischen Anordnung, z. B den Farblängsfehler, den Farbvergrößerungsfehler, das sekundäre Spektrum sowie die farbige Variation der Koma zu korrigieren. Zusätzlich lassen sich auch monochromatische Abbildungsfehler korrigieren.

Die Erfindung fußt auf der Erkenntnis, daß die Höhe der Beugungsstrukturen als Freiheitsgrad zur Beeinflussung der lokalen Beugungseffizienz des diffraktiven optischen Elements herangezogen und hierzu über die Fläche des diffraktiven optischen Elements verändert werden kann. Gleichzeitig wurde erkannt, daß die Lehre des Fachartikels, die Strukturhöhen zur Erhöhung der Beugungseffizienzen weniger breiter Beugungsstrukturen zu verringern, nur bei speziellen optischen Randbedingungen, in denen durch die Verringerung der Strukturhöhen eine Verbesserung der Blaze-Wirkung erreicht wird, tatsächlich zu einer Erhöhung der Beugungseffizienz führt. In den meisten anderen Fällen, in denen die Blaze-Wirkung durch die Strukturhöhenänderung nicht in dieser Weise verbessert wird, erreicht die Lehre des Fachartikels genau das Gegenteil des erwünschten Effekts, nämlich eine Erniedrigung der Beugungseffizienz dort, wo sie nach dem Fachartikel eigentlich erhöht sein sollte, nämlich im Bereich niedriger Beugungsstrukturen.

Mit dem erfindungsgemäßen diffraktiven optischen Element werden die verhältnismäßig geringen Beugungsverluste im Bereich der breiten Strukturen erhöht und so an die verhältnismäßig großen Beugungsverluste im Bereich der weniger breiten Strukturen derart angeglichen, daß ein diffraktives optisches Element mit einer über seine Fläche gleichbleibenden lokalen Beugungseffizienz resultiert, was für viele Anwendungsfälle erwünscht ist. Über die Strukturhöhenvariation lassen sich zudem vorgegebene Verläufe lokaler Beugungseffizienzen realisieren, ohne daß dabei wesentliche Abstriche bei anderen Abbildungseigenschaften des diffraktiven optischen Elements in Kauf genommen werden müssen.

Das erfindungsgemäße diffraktive optische Element weist aufgrund der Strukturhöhenvariation im Bereich der weniger breiten Beugungsstrukturen geringere strukturhöhenbedingte Effizienzverluste auf als im Bereich der breiteren Beugungsstrukturen. Dies wird dazu genutzt, die strukturbreitenbedingte Größe der Beugungseffizienz im Bereich weniger breiter Beugungsstrukturen, die bei diffraktiven optischen Elementen mit konstanter Strukturhöhe zwangsläufig auftritt, ganz oder teilweise zu kompensieren oder sogar überzukompensieren. Im Fall einer Überkompensation hat das diffraktive optische Element dort, wo normalerweise die Beugungseffizienz am geringsten ist, nämlich im Bereich der Beugungsstrukturen mit der geringsten Breite, die höchste Beugungseffizienz.

Ein diffraktives optisches Element gemäß Anspruch 2 hat den für viele Anwendungsfälle besonders erwünschten konstanten Verlauf der Beugungseffizienzfunktion über die Fläche des diffraktiven optischen Elements. Dieser Verlauf wird erreicht, indem die Zunahme der Beugungseffizienz bei größeren Strukturbreiten durch eine entsprechende Verkleinerung der Strukturhöhe im Bereich der breiten Beugungsstrukturen genau kompensiert wird. Die Strukturhöhe wird dabei vorzugsweise ausgehend von einer optimalen Strukturhöhe für die Beugungsstruktur verkleinert, für die bekannte Berechnungsformeln existieren.

Mit dem diffraktiven optischen Element gemäß Anspruch 3 lassen sich z. B. Anforderungen an die Beugungseffizienzfunktion des diffraktiven optischen Elements erfüllen, bei denen die Beugungseffizienzfunktion zum Rand des diffraktiven optischen Elements hin zunehmen soll. Mit einem derartigen diffraktiven optischen Element kann beispielsweise ein radial gegenläufiger Beugungseffizienzabfall anderer optischer Komponenten kompensiert werden.

Das diffraktive optische Element gemäß Anspruch 4 kann als Apodisationselement eingesetzt werden.

Ein diffraktives optisches Element gemäß Anspruch 5 läßt sich mit vertretbarem Aufwand herstellen und ist aufgrund seiner Rotationssymmetrie nicht sehr justagekritisch.

Gesteigert wird die Beugungseffizienz bei einem diffraktiven optischen Element gemäß Anspruch 6.

Das diffraktive optische Element kann je nach Einsatzzweck als transmissives diffraktives optisches Element gemäß Anspruch 7 oder als reflektives optisches Element gemäß Anspruch 8 ausgeführt sein.

Eine weitere Aufgabe der vorliegenden Erfindung ist es, eine optische Anordnung mit einem diffraktiven optischen Element nach dem Oberbegriff des Anspruchs 9 derart weiterzubilden, daß ihre Flexibilität bei der Realisierung vorgegebener lokaler Gesamteffizienzen für die optische Anordnung nochmals erhöht ist.

Diese Aufgabe wird erfindungsgemäß gelöst durch eine optische Anordnung mit den Merkmalen des Anspruchs 9.

Mit dem zusätzlichen Neutralfilter lassen sich z. B. Feineinstellungen zur Erreichung einer vorgegebenen Gesamteffizienzfunktion realisieren. Die lokale Gesamteffizienz der optischen Anordnung setzt sich hierbei zusammen aus der lokalen Beugungseffizienz des diffraktiven optischen Elements und gegebenenfalls weiterer diffraktiver optischer Komponenten und der lokalen Transmission des Neutralfilters und gegebenenfalls weiterer optischer Komponenten. Die Transmissionsfunktion des Neutralfilters kann dabei stufenlos, d.h. mit kontinuierlichem Verlauf der Transmission, oder auch abgestuft, d.h. mit diskreten Sprüngen in der Transmission, ausgeführt sein.

Da Neutralfilter bei der Justage einer optischen Anordnung in der Regel wenig kritisch sind, ist eine optische Anordnung realisierbar, bei der eine Mehrzahl von Neutralfiltern mit unterschiedlichen Transmissionsfunktionen gegeneinander ausgetauscht werden können, um so verschiedene vorgegebene Gesamteffizienzfunktionen zu realisieren. Auch gewünschte lokale Effekte, die über die Variation der Strukturhöhe des diffraktiven optischen Elements nur mit höherem Aufwand realisierbar wären, können in einer derartigen optischen Anordnung mit Hilfe des Neutralfilters erzeugt werden.

Eine optische Anordnung gemäß Anspruch 10 stellt ein Apodisationselement ein, welches für eine Reihe von Anwendungsfällen einsetzbar ist.

Eine optische Anordnung gemäß Anspruch 11 weist eine verringerte Anzahl optischer Grenzflächen auf.

Ausführungsbeispiele der Erfindung werden nachfolgend anhand der Zeichnung näher erläutert; es zeigen:
- Figur 1: einen Meridionalschnitt durch eine diffraktive Sammellinse nach dem Stand der Technik;
- Figur 2: einen Ausschnitt von Figur 1;
- Figur 3: einen zur Figur 2 ähnlichen Ausschnitt einer erfindungsgemäßen diffraktiven Sammellinse;
- Figur 4: einen zur Figur 2 ähnlichen Ausschnitt einer weiteren diffraktiven Sammellinse nach dem Stand der Technik;
- Figuren 5 bis 7: schematische Diagramme der lokalen Beugungseffizienzen der Sammellinsen nach den Figuren 2 bis 4 als Funktion des Mittelpunktsabstands;
- Figur 8: ein Diagramm mit berechneten Strukturhöhen einer zur Figur 3 ähnlichen diffraktiven Sammellinse;
- Figur 9: ein Diagramm mit berechneten lokalen Beugungseffizienzverläufen der diffraktiven Sammellinse mit Strukturhöhen gemäß Figur 8 als Funktion des Mittelpunktsabstands;
- Figur 10: ein Diagramm mit berechneten lokalen Phasenverläufen der diffraktiven Sammellinse mit Strukturhöhen gemäß Figur 8 als Funktion des Mittelpunktsabstands;
- Figur 11: ein Diagramm mit berechneten Strukturbreiten einer zur Figur 3 ähnlichen diffraktiven Sammellinse;
- Figur 12: eine erfindungsgemäße optische Anordnung mit einer diffraktiven Sammellinse gemäß Figur 4; und
- Figur 13: ein schematisches Diagramm mit dem lokalen Beugungseffizienzverlauf der optischen Anordnung gemäß Figur 12.

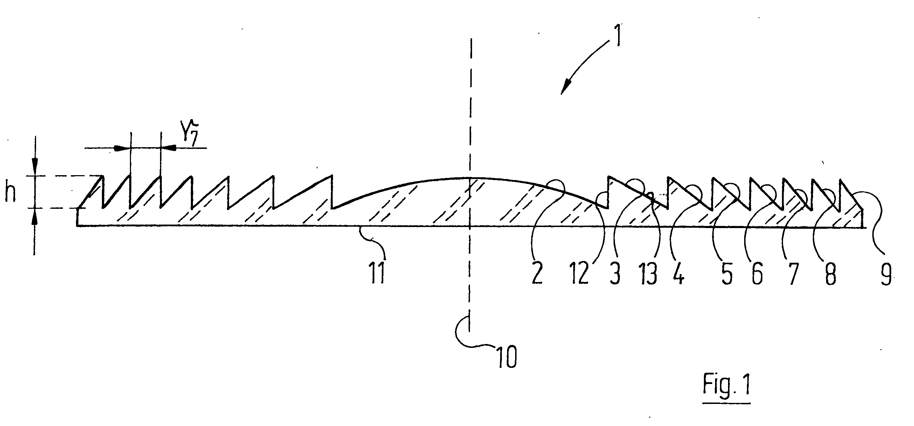

Die in Figur 1 insgesamt mit dem Bezugszeichen 1 bezeichnete diffraktive Sammellinse entspricht dem Stand der Technik. Sie weist auf einer Seite eine Mehrzahl von Beugungsstrukturen 2 bis 9 auf, die rotationssymmetrisch zur optischen Achse 10 der diffraktiven Sammellinse 1 angeordnet sind. Auf der anderen Seite besitzt die diffraktive Sammellinse 1 eine eben abschließende Gegenfläche 11.

Die zentrale Beugungsstruktur 2 weist eine konvexe Oberfläche auf. Deren radialen Abschluß bildet eine zylinderförmige Stufenfläche 12, die Teil der Beugungsstruktur 3 ist, die die Beugungsstruktur 2 ringförmig umgibt. An die Stufenfläche 12 schließt sich eine radial nach außen abfallende Beugungsfläche 13 an, die ebenfalls Teil der Beugungsstruktur 3 ist. Die Beugungsstrukturen 4 bis 9 weisen wie die Beugungsstruktur 3 ebenfalls eine Stufenfläche und eine Beugungsfläche auf, die sich bei der diffraktiven Sammellinse 1 radial von innen nach außen abwechseln. Es ergibt sich im Meridionalschnitt der Figur 1 eine insgesamt sägezahnförmige Struktur der der Gegenfläche 11 gegenüberliegenden Oberfläche der diffraktiven Sammellinse 1.

Die Beugungsflächen der Beugungsstrukturen 2 bis 9 (vgl. Beugungsfläche 13) fallen unter einem solchen Winkel nach außen ab, daß das Licht bevorzugt in eine bestimmte Beugungsordnung, für die aufgrund der Breiten der Beugungsstrukturen 2 bis 9 die Beugungsbedingung erfüllt ist, gelenkt wird. Eine derart angepaßte Form der Beugungsstrukturen wird als "Blaze-Profil" bezeichnet.

Die Höhe h der Beugungsstrukturen 2 bis 9, d. h. ihre Erstreckung in Richtung der optischen Achse 10 vom jeweils höchsten bis zum jeweils tiefsten Punkt der Beugungsstruktur 2 bis 9, ist für alle Beugungsstrukturen 2 bis 9 gleich. Für die Beugungsstrukturen 3 bis 9 entspricht die Höhe h der Erstreckung der Stufenflächen (vgl. Stufenfläche 12 der Beugungsstruktur 3) parallel zur optischen Achse 10.

Die Breite der Beugungsstrukturen 2 bis 9, d. h. ihre bezüglich der optischen Achse 10 radiale Erstreckung, variiert über die Beugungsstrukturen 2 bis 9 entsprechend einer vorgegebenen Phasenfunktion und nimmt von der Beugungsstruktur 2 bis zur Beugungsstruktur 9 kontinuierlich ab. Stellvertretend ist in Figur 1 die Breite r₇ der Beugungsstruktur 7 eingezeichnet. Die Breite einer Beugungsstruktur in einem bestimmten Mittelpunktsabstand ist hierbei ein Maß für die realisierte Phasenfunktion der diffraktiven Sammellinse 1.

Die Höhen h sowie die Breiten r haben eine Größe, die vergleichbar ist mit der Wellenlänge des Lichts, für das die diffraktive Sammellinse 1 zum Einsatz kommen soll. Das Verhältnis der Breite r und der verwendeten Wellenlänge liegt hierbei im Bereich zwischen 1 und > 100.

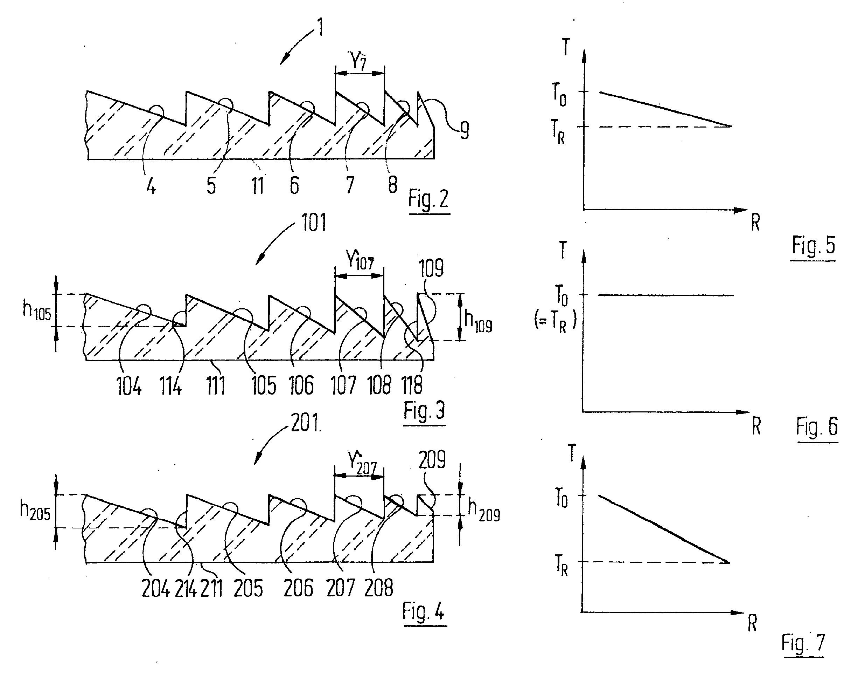

Der Randbereich der diffraktiven Sammellinse 1 ist nochmals vergrößert im Ausschnitt in Figur 2 dargestellt.

Für eine diffraktive Sammellinse 1 gemäß den Figuren 1 und 2 mit konstanter Höhe der Beugungsstrukturen läßt sich auf Basis der elektromagnetischen Beugungstheorie der radiale Verlauf der Beugungseffizienz T berechnen.

Das Ergebnis einer derartigen Rechnung ist schematisch in Figur 5 dargestellt. Ausgehend von einem Beugungseffizienzwert T₀, d. h. der Beugungseffizienz der Beugungsstruktur 4, fällt die Beugungseffizienz T bis zur äußersten Beugungsstruktur 9 auf einen Randwert T_{R} ab. Die Beugungseffizienz T nimmt also über den Mittelpunktsabstand R mit abnehmender Breite r der Beugungsstrukturen 4 bis 9 ab.

Nachfolgend werden weitere Ausführungsformen diffraktiver Sammellinsen diskutiert. Komponenten, die hierbei denjenigen entsprechen, die schon oben unter Bezugnahme auf die Zeichnung beschrieben wurden, erhalten um jeweils 100 erhöhte Bezugszeichen und werden nicht nochmals im einzelnen erläutert.

In der Ausschnittsdarstellung von Figur 3, die derjenigen der Figur 2 ähnlich ist, ist eine erfindungsgemäße diffraktive Sammellinse 101 dargestellt. Die Beugungsstrukturen 104 bis 109 weisen dieselbe sägezahnartige Grundform auf wie die entsprechenden Beugungsstrukturen 4 bis 9 der diffraktiven Sammellinse 1. Auch die Breiten r der Beugungsstrukturen 104 bis 109 sind denjenigen der Beugungsstrukturen 4 bis 9 gleich, wie z. B. ein Vergleich der Breiten r₇ der Beugungsstruktur 7 und r₁₀₇ der Beugungsstruktur 107 zeigt.

Die sich jeweils am weitesten von der Gegenfläche 111 weg erstreckenden Abschnitte der Beugungsstrukturen 104 bis 109, also die Spitzen der Sägezähne, haben für alle Beugungsstrukturen 104 bis 109 den gleichen Abstand zur Gegenfläche 111, wie dies auch bei der diffraktiven Sammellinse 1 nach dem Stand der Technik der Fall ist. Bei der erfindungsgemäßen diffraktiven Sammellinse 101 von Fig. 3 nimmt jedoch die Höhe der Stufenflächen 114 bis 118 der Beugungsstrukturen 105 bis 109 mit abnehmendem Mittelpunktsabstand und daher mit zunehmender Breite der Beugungsstruktur ab. Die Höhe der Beugungsstruktur 105, h₁₀₅ ist daher geringer als die Höhe der Beugungsstruktur 109, h₁₀₉.

Das Blaze-Profil der Beugungsstrukturen der diffraktiven Sammellinsen 101 kann als kontinuierlich geneigte Fläche oder auch durch eine bekannte Multilevelstruktur mit treppenartigem Verlauf ausgeführt sein.

In Figur 6 ist schematisch der lokale Beugungseffizienzverlauf der Beugungsstruktur 101 als Funktion des Mittelpunktsabstands dargestellt. Die Beugungseffizienz T ist zwischen den Beugungsstrukturen 104 und 109 konstant gleich dem Randwert der Beugungseffizienz der Beugungsstruktur 109, T_{R}. Dies liegt daran, daß sich bei der diffraktiven Sammellinse 101 zwei beugungseffizienzbeeinflussende Effekte kompensieren: Einerseits nimmt die Beugungseffizienz mit zunehmender Breite r der Beugungsstrukturen 109 bis 104 zu, wie schon im Zusammenhang mit der diffraktiven Sammellinse 1 (vgl. Figur 5) diskutiert. Andererseits nimmt die Beugungseffizienz mit abnehmender Höhe der Beugungsstrukturen 109 bis 104 ab. Bei der diffraktiven Sammellinse 101 ist die Höhenvariation auf die Breitenvariation derart abgestimmt, daß insgesamt eine über den Mittelpunktsabstand R konstante Beugungseffizienz T_{R} resultiert.

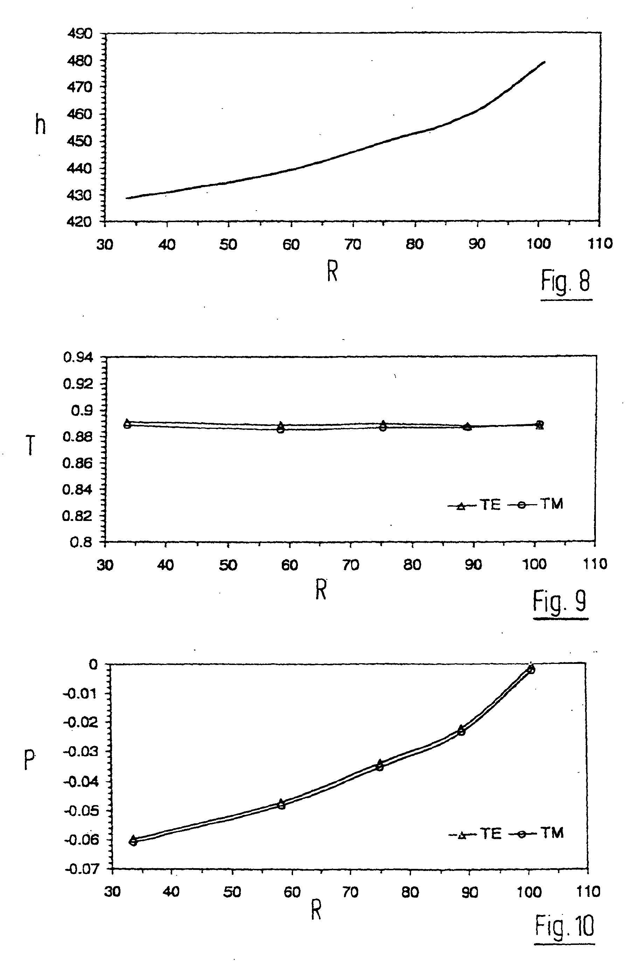

Mit Hilfe der Figuren 3 und 6 wurde vorstehend der lokale Beugungseffizienzverlauf bei einer diffraktiven Sammellinse 101, die Beugungsstrukturen mit nach außen abnehmender Breite und zunehmender Höhe aufweist, schematisch diskutiert. Das Ergebnis quantitativer Rechnungen auf Basis der elektromagnetischen Beugungstheorie zeigen die Figuren 8 bis 10:

Figur 8 zeigt die Abhängigkeit der Höhe h in nm der Beugungsstrukturen vom Mittelpunktsabstand R für eine diffraktive Sammellinse mit einem Aufbau, der dem Prinzip nach dem der Figur 3 entspricht. Die Höhe der Beugungsstrukturen beträgt am Rand bei R=110 mm h=480 nm. Die Höhe h der Beugungsstrukturen verringert sich in Richtung zum Mittelpunkt der diffraktiven Linse progressiv bis zu einer Höhe h=429 nm bei einem Mittelpunktsabstand R=33 mm.

Für einen derartigen Verlauf der Höhen h der Beugungsstrukturen ergibt sich über den Mittelpunktsabstand R eine Beugungseffizienz T, die in Figur 9 dargestellt ist. In die Berechnung der Beugungseffizienz T gingen als Parameter ein eine Beleuchtungswellenlänge von 248,34 nm sowie ein Brechungsindex des Materials der diffraktiven Sammellinse von 1,508. Die Beugungsstrukturen weisen ein Blaze-Profil auf.

Die Beugungseffizienz bleibt für beide Polarisationsrichtungen TE (offene Dreiecke) sowie TM (offene Kreise) näherungsweise konstant bei einem Beugungseffizienzwert von ca. 0,89. Die Beugungseffizienzwerte für die TE-Polarisation sind tendenziell minimal höher als diejenigen für TM-Polarisation. Auch hier wurde wieder ohne Antireflex-Beschichtung der diffraktiven Sammellinse gerechnet.

Für einen Höhenverlauf der Beugungsstrukturen gemäß Figur 8 ist in Figur 10 der Verlauf der Phase P des die jeweiligen Beugungsstrukturen durchlaufenden Lichts in rad über den Mittelpunktsabstand R dargestellt. Die Kurvenform des Phasenverlaufs entspricht qualitativ derjenigen des Höhenverlaufs in Figur 8. Die Phase P fällt ausgehend von einem relativen Wert von 0 rad bei R=100 mm progressiv bis zu einem Wert -0,06 rad bei R=33 mm.

Wenn bei einer optischen Anordnung mit einer derartigen diffraktiven Sammellinse ein konstanter Phasenverlauf über den Querschnitt des Beleuchtungsbündels gewünscht ist, muß ein Phasenverlauf, wie er in Figur 10 dargestellt ist, in anderen optischen Komponenten, z. B. in refraktiven optischen Komponenten, vorkompensiert werden.

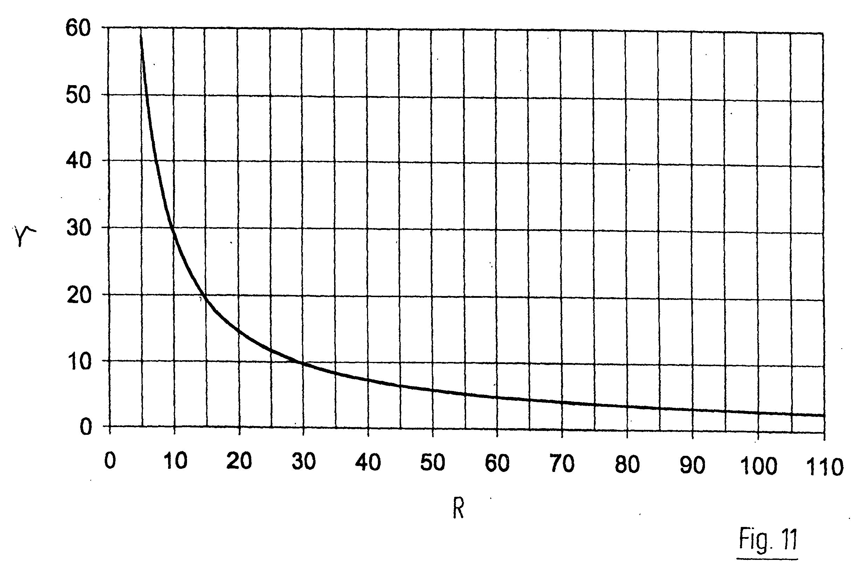

Figur 11 zeigt den Verlauf der Strukturbreite r der Beugungsstrukturen der diffraktiven Sammellinse, für die die Beugungseffizienzen gemäß Fig. 9 resultieren. Die Strukturbreite nimmt, ausgehend vom Rand der Sammellinse (R=110 mm), von einer Breite r=2,5 µm bis zu einer Breite r=60 µm im Bereich des Zentrums der Sammellinse (R=5 mm) zu.

Eine weitere Variante einer diffraktiven Sammellinse 201 nach dem Stand der Technik ist in Figur 4 dargestellt. Dort ist der Verlauf der Höhen h der Beugungsstrukturen 204 bis 209 genau umgekehrt wie bei der diffraktiven Sammellinse 101 der Figur 3, d. h. die Höhen h nehmen von der in Figur 4 dargestellten innersten, breitesten Beugungsstruktur 204 bis zur äußersten, schmälsten Beugungsstruktur 209 hin ab. Die Höhe der Beugungsstruktur 209, h₂₀₉, ist demnach geringer als die Höhe der Beugungsstruktur 205, h₂₀₅.

Bei der diffraktiven Sammellinse 201 verstärken sich die beiden Effekte, die die lokale Abhängigkeit der Beugungseffizienz T beeinflussen: Einerseits nimmt die Breite r der Beugungsstrukturen und andererseits deren Höhe h nach außen hin ab, was jeweils zu einer Verringerung der Beugungseffizienz führt. Die Folge ist der Beugungseffizienzverlauf, der schematisch in Figur 7 dargestellt ist. Dort fällt die Beugungseffizienz T, ausgehend von einem Beugungseffizienzwert T₀ der Beugungsstruktur 204, als Funktion des Mittelpunktsabstands R mit verglichen zu Figur 5 größerer Steigung ab, so daß ein Tiefstwert der Beugungseffizienz, Tₘᵢₙ resultiert, der bei der diffraktiven Sammellinse 201 geringer ist als bei der diffraktiven Sammellinse 1.

Es ist klar, daß über vorgegebene Variationen der Breiten r und der Höhen h der Beugungsstrukturen praktisch beliebige Beugungseffizienzverläufe eingestellt werden können. Die Breiten r müssen dabei von innen nach außen nicht monoton abnehmen, wie vorstehend beschrieben, sondern können auch monoton zunehmen oder auch andere Abhängigkeiten, die sich z.B. durch Potenzfunktionen des Mittelpunktsabstands R beschreiben lassen und Haupt- und Nebenmaxima oder -minima aufweisen können.

Die diffraktiven Sammellinsen 1 bis 201 können zur Steigerung ihrer Beugungseffizienz eine Antireflex-Beschichtung aufweisen.

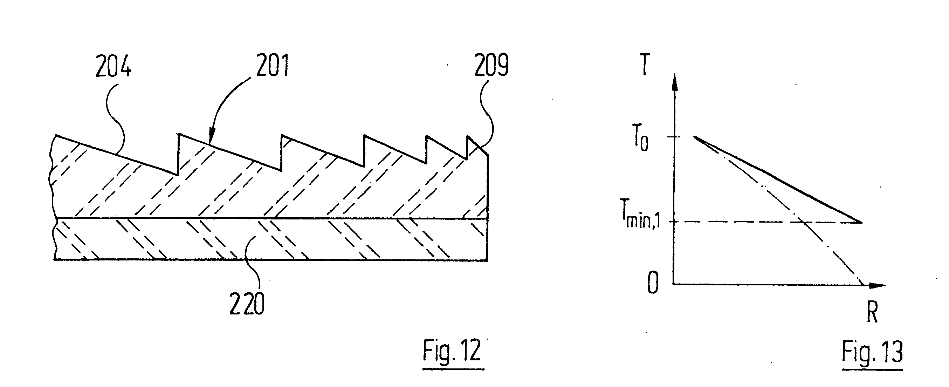

Ein zusätzlicher Freiheitsgrad zur Einstellung eines gewünschten radialen Gesamteffizienzverlaufs für nutzbares Licht, in den sowohl die Beugungseffizienzen als auch die Transmissionen der beteiligten optischen Elemente eingehen, ergibt sich durch den Einsatz eines Graufilters 220. Eine hierzu beispielhafte erfindungsgemäße optische Anordnung ist in Figur 12 dargestellt, die die Kombination des Graufilters 220 mit einem diffraktiven optischen Element gemäß Fig. 4 zeigt. Der Graufilter 220 ist mit der Gegenfläche 211 der diffraktiven Sammellinse 201 verbunden. Diese Verbindung kann entweder durch einen entsprechenden optischen Kleber hergestellt werden oder die diffraktive Sammellinse 201 und der Graufilter 220 werden optisch über eine Brechungsindex-angepaßte Flüssigkeit aneinander gekoppelt und in dieser Lage gehaltert.

Es ist klar, daß der Graufilter 220 mit beliebigen diffraktiven optischen Elementen mit variierender Strukturhöhe, insbesondere auch mit dem der Fig. 3, kombiniert werden kann.

Die diffraktive Struktur kann auch direkt auf den Graufilter aufgebracht sein. Hierzu können das diffraktive optische Element und der Graufilter aus einem Material hergestellt sein. Das diffraktive optische Element kann dann direkt in den Graufilter strukturiert werden.

Der Graufilter 220 hat im Bereich der Beugungsstruktur 204 volle Durchlässigkeit, während er im Bereich der Beugungsstruktur 209 vollständig blockt.

Den Gesamteffizienzverlauf der optischen Anordnung aus der diffraktiven Sammellinse 201 und dem Graufilter 220 verdeutlicht die Figur 13. Dort ist wie in Figur 7 der lokale Beugungseffizienzverlauf der diffraktiven Sammellinse 201 als durchgezogene Linie dargestellt. Als strichpunktierte Linie ist in Figur 13 der lokale Gesamteffizienzverlauf der optischen Anordnung aus der diffraktiven Sammellinse 201 und dem Graufilter 220 dargestellt. Die Gesamteffizienz der optischen Anordnung fällt, ausgehend von einem Wert T₀ bei der in Figur 12 innersten Beugungsstruktur 204, zum Rand hin bis auf 0 ab.

Natürlich können die diffraktive Sammellinse 201 und der Graufilter 220 auch räumlich voneinander getrennte Komponenten sein.

Der Graufilter kann alternativ auch durch eine Metallbeschichtung der diffraktiven Sammellinse ersetzt sein. Derartige Metallbeschichtungen, die einen vorgegebenen Transmissionsverlauf aufweisen, sind bekannt.

Die im Rahmen der Figurenbeschreibung angegebenen Effizienzbetrachtungen lassen sich analog auch für ein reflektives diffraktives optisches Element anstellen. Auch in diesem Fall liegen die gleichen prinzipiellen Abhängigkeiten der Beugungseffizienz von der Strukturbreite bzw. der Strukturhöhe vor.

Bei einem reflektiven diffraktiven optischen Element wird im Regelfall eine reflektive Beschichtung zur Optimierung der Reflexionseffizienz eingesetzt. Hierbei kann eine Metallbeschichtung oder eine dielektrische hochreflektierende (HR) Beschichtung eingesetzt sein. Die diffraktive Struktur kann in diesem letzten Fall auf oder unter dem HR-Schichtsystem angeordnet sein. Das Material der diffraktiven Struktur kann sich in beiden Fällen von den beim HR-Schichtsystem verwendeten Materialien unterscheiden. Besonders gute Effizienzergebnisse werden dann erzielt, wenn der Brechungsindex der Schicht des HR-Schichtsystems, die den Beugungsstrukturen direkt benachbart ist, derart gewählt ist, daß die innere Periodizität des HR-Schichtsystems durch die Schicht, die durch die Beugungsstrukturen vorgegeben ist, fortgeführt wird. Bei einem HR-Schichtsystem mit alternierend hoch- und niedrigbrechenden Schichten sollte beispielsweise dann, wenn die Schicht, die durch die Beugungsstrukturen vorgegeben ist, niedrigbrechend ist, die erste Schicht des HR-Schichtsystems, die direkt den Beugungsstrukturen benachbart ist, hochbrechend sein.

## Patentansprüche

1. Diffraktives optisches Element mit einer Mehrzahl von Beugungsstrukturen, die jeweils eine in der Ebene des diffraktiven optischen Elements gemessene Breite und eine senkrecht dazu gemessene Höhe aufweisen, wobei die Breiten und die Höhen der Beugungsstrukturen über die Fläche des diffraktiven optischen Elements variieren,
**dadurch gekennzeichnet, daß**
die Höhen der Beugungsstrukturen (104 bis 109) derart gegenläufig zu ihren Breiten variieren, daß breitere Beugungsstrukturen (105) eine geringere Höhe (h₁₀₅) aufweisen als weniger breite Beugungsstrukturen (109, h₁₀₉).

2. Diffraktives optisches Element nach Anspruch 1, **dadurch gekennzeichnet, daß** die Höhen (h₁₀₄ bis h₁₀₉) der Beugungsstrukturen (104 bis 109) derart gegenläufig zu ihren Breiten (r₁₀₄ bis r₁₀₉) variieren, daß die lokale Beugungseffizienz des diffraktiven optischen Elements (101) über dessen Fläche näherungsweise konstant ist.

3. Diffraktives optisches Element nach Anspruch 1 oder 2, **dadurch gekennzeichnet, daß** die Höhen (h₁₀₄ bis h₁₀₉) der Beugungsstrukturen (104 bis 109) derart variieren, daß die lokale Beugungseffizienz des diffraktiven optischen Elements (101) einer vorgegebenen Beugungseffizienzfunktion über die Fläche des diffraktiven optischen Elements (101) hinweg folgt.

4. Diffraktives optisches Element nach Anspruch 3, **dadurch gekennzeichnet, daß** die Beugungseffizienzfunktion eine Apodisationsfunktion ist.

5. Diffraktives optisches Element nach einem der vorhergehenden Ansprüche, **dadurch gekennzeichnet, daß** die Beugungsstrukturen (104 bis 109) koaxial ringförmig angeordnet sind, wobei die radial gemessenen Breiten (r₁₀₄ bis r₁₀₉) und die axial gemessenen Höhen (h₁₀₄ bis h₁₀₉) über den Radius des diffraktiven optischen Elements (101) variieren.

6. Diffraktives optisches Element nach einem der vorhergehenden Ansprüche, **gekennzeichnet durch** eine die Beugungseffizienz steigernde Beschichtung.

7. Diffraktives optisches Element nach einem der vorhergehenden Ansprüche, **dadurch gekennzeichnet, daß** es transmissiv ausgeführt ist.

8. Diffraktives optisches Element nach einem der Ansprüche 1 bis 6, **dadurch gekennzeichnet, daß** es reflektiv ausgeführt ist.

9. Optische Anordnung
a) mit einem diffraktiven optischen Element mit einer Mehrzahl von Beugungsstrukturen, die jeweils eine in der Ebene des diffraktiven optischen Elements gemessene Breite und eine senkrecht dazu gemessene Höhe aufweisen, wobei die Breiten der Beugungsstrukturen über die Fläche des diffraktiven optischen Elements variieren;
b) mit einem Neutralfilter mit über die Fläche des Neutralfilters derart variierender Transmission, daß die lokale Gesamteffizienz der optischen Anordnung für nutzbares Licht, in die die lokale Beugungseffizienz des diffraktiven optischen Elements und die lokale Transmission des Neutralfilters eingeht, einer vorgegebenen über der Apertur der optischen Anordnung variierenden Gesamteffizienzfunktion entspricht;
**dadurch gekennzeichnet, daß**
c) die Höhen der für eine Beleuchtungswellenlänge vorgesehenen Beugungsstrukturen (104 bis 109; 204 bis 209) über die Fläche des diffraktiven optischen Elements (101; 201) variieren.

10. Optische Anordnung nach Anspruch 9, **dadurch gekennzeichnet, daß** die Beugungseffizienzfunktion eine Apodisationsfunktion ist.

11. Optische Anordnung nach Anspruch 10, **dadurch gekennzeichnet, daß** das diffraktive optische Element (201) und das Neutralfilter (220) miteinander zu einem integrierten optischen Element verbunden sind.
